# EUROPEAN PATENT APPLICATION

(11) **EP 1 067 453 A1**
(43) Date of publication of application: **10.01.2001**
(21) Application number: 00401820.6
(22) Date of filing: 26.06.2000
(51) Int. Cl.: G06F 3/033, H04N 5/445

(54) **System and method for control of the user interface of an item of mass-market electronic apparatus**

(30) Priority: 09.07.1999 FR 9908909
(71) Applicant: THOMSON multimedia, 92100 Boulogne Billancourt (FR)
(72) Inventor: Shao, Jiang, 92100 Boulogne-Billancourt (FR); Legrand, Jean-Christophe, 92100 Boulogne-Billancourt (FR)
(74) Representative: Kohrs, Martin

(57) **Abstract**

The invention relates to a system for control of the user interface of an item of mass-market electronic apparatus. The functions of the apparatus are accessible via a hierarchical menu and a personalized menu is provided containing the user's favourite functions, which can contain:
- single functions, corresponding to the duplication, from the hierarchical menu, of functions for control and/or for setting of the apparatus, and/or
- combined functions, corresponding to the combination of functions and/or of options from the hierarchical menu.

The system includes means for automatically creating and updating the personalized menu on the basis of the frequency of activation of the functions by the user.

## Description

The present invention relates in a general way to the field of the user interfaces for mass-market electronic apparatus, such as television receivers, video recorders and decoders, etc. It relates more particularly to the user interfaces in which a hierarchical menu allows access to the functions of the apparatus (in order to change settings, choose programmes, etc.).

These types of menus include several levels of menus and sub-menus through which the user can navigate, generally by using a remote-control device. The number of functions accessible (parameter settings, programme selection, information search, etc.) is already very large in present-day mass-market electronic apparatus and, with the evolution of technology, in particular the introduction of domestic digital networks making it possible to connect several different items of apparatus together, the complexity of the menus will become greater and greater. It is generally observed, though, that the users use only a few functions on a frequent basis. It may then appear tiresome to them always to be carrying out the same operations of navigation through the menus and sub-menus to reach these functions.

For this reason, systems have already been proposed in the prior art in which the user can create a personalized menu in order to gain access more easily to the functions which he uses the most frequently. This personalized menu is accessible, for example, by using a particular key on the remote control, or else is placed at the highest hierarchical level of the tree structure of the menus so as to be displayed even before the main menu or at the same time whenever the user calls up the menu display.

However, the creation of the personalized menus proposed in the prior art is relatively complex to implement, since the user has to carry out several successive operations, by using his remote control for example, in order to select each function which he wishes to see appear in his personalized menu. Moreover, if he changes his usual habits and wishes to see other functions appear in his personalized menu, he has to recommence the selection operations for the new functions.

One object of the present invention is to remedy the above mentioned drawbacks.

To that end, the invention relates to a system for control of the user interface of an item of mass-market electronic apparatus in which the functions of the said apparatus are accessible via a hierarchical menu and in which a personalized menu is provided containing the user's favourite functions. According to the invention, the system includes means for automatic creation and updating of the said personalized menu on the basis of the frequency of activation of the functions by the user. The personalized menu is configured to contain:
- single functions, corresponding to the duplication, from the hierarchical menu, of functions for control and/or for setting of the said apparatus, and/or
- combined functions, combining at least one control and/or setting function and at least one parameter associated with at least one of the said control and/or setting functions.

Hence, the user no longer needs to carry out complex manual operations in order to create his personalized menu and he always has easy access to the functions which he uses most often over a given period.

The presence of combined functions in the personalized menu, in order to make it possible to memorize option choices used preferentially by a user, even further increases speed of access to the user's favourite functions.

According to another aspect of the invention, only certain predefined functions from among the set of functions of the hierarchical menu are eligible to form part of the personalized menu.

This advantageously makes it possible to limit the size of the memory and the computing power necessary for managing the personalized menu.

According to one particular embodiment of the invention, the system includes means for memory storage of the frequency of activation of the functions by the user, the said memory-storage means being suitable for storing an accesses counter and the time of last access to each of the said functions.

According to one aspect of this embodiment, the memory-storage means include a first table for storing all the functions eligible to form part of the personalized menu, as a single function or combined function, the said table storing the accesses counter and the time of last access to each of the said functions.

According to another aspect of this embodiment, the memory-storage means further include a supplementary table associated with each combined function in order to store the combinations of functions and/or of options activated by the user, as well as an accesses counter and the time of last access to each combination.

According to another aspect of the invention, a method of updating the tables for memory storage of the single and/or combined functions described above comprises the stages consisting in:
a) detecting whether the user has carried out an action;
b) in the event that an action is detected, testing whether the action carried out corresponds to the activation of a function stored in memory in the first table; and
c) incrementing the accesses counter for the said function and updating the time of last access to the said function when the response to the preceding test is positive.

The invention applies equally to a system suitable for being controlled by a remote-control device and, according to one preferred embodiment of the invention, the system includes means for presenting the personalized menu to the user when the latter presses a specific key on the said remote-control device.

According to another aspect of the invention, the hierarchical menu includes a heading, accessible from the highest hierarchical level, for causing the personalized menu to be presented.

The invention also relates to a mass-market electronic apparatus including a system for control of its user interface as described above.

Other characteristics and advantages of the invention will emerge upon reading the following description of a particular, non-limiting embodiment of the invention given by reference to the attached figures, among which:
- Figure 1 diagrammatically represents a remote-control device belonging to a system according to the invention;
- Figure 2 diagrammatically represents circuits equipping an apparatus intended to be controlled by the device of Figure 1 and including a system for control of its user interface in accordance with the invention;
- Figure 3 diagrammatically represents a hierarchical menu making it possible to gain access to the various functions of an apparatus partly represented in Figure 2;
- Figures 4a to 4d represent examples of the display of menus and sub-menus of the hierarchical menu represented in Figure 3;
- Figures 5a and 5b represent examples of the display of a personalized menu according to the invention;
- Figure 6 represents a flowchart illustrating various stages of a method according to another aspect of the invention.

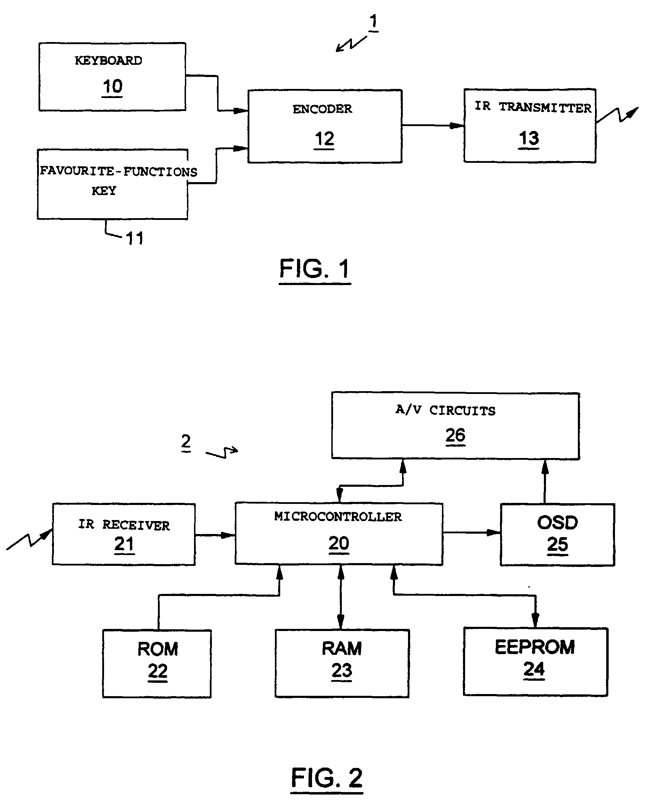

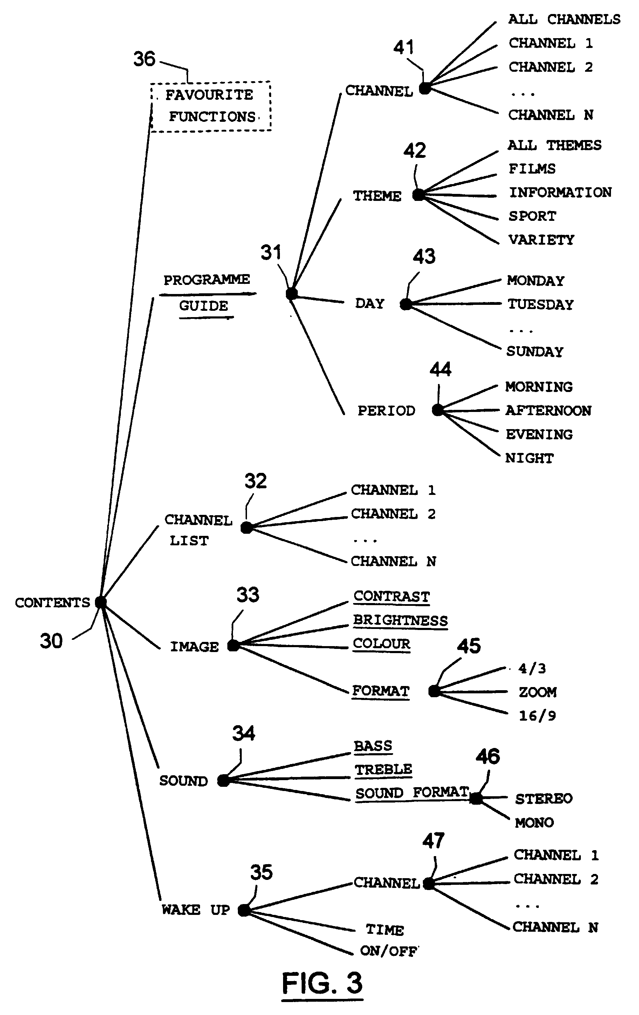

A particular embodiment of the invention will now be described. In this embodiment, interest will focus on the user interface of a television receiver the functions of which are accessible via a tree structure of menus (represented in Figure 3) and can be activated remotely via a remote-control device (represented in Figure 1). Naturally, the invention is not limited to this type of apparatus but applies more generally to any type of mass-market electronic apparatus including a user interface in which the functions of the apparatus are accessible via a hierarchical menu.

In Figure 1, a remote-control device 1 for a television receiver apparatus has been represented in block form. Such a device is widely used in the user interfaces in order to input the user's choices. It conventionally includes a keyboard 10 comprising function control keys and at least one key making it possible to cause a menu to be displayed. According to one preferred aspect of the invention, it also includes a particular key 11 making it possible to trigger the display of the personalized menu containing the user's favourite functions. A coding circuit 12 codes the signals corresponding to the actuation of the keys before sending them to an infrared transmitter 13 making it possible to send the control signals to the television set.

Figure 2 represents the elements of the television receiver belonging to the user-interface control system (designated by the reference 2). An infrared receiver 21 receives the signals transmitted by the transmitter 13 of the remote-control device 1. It delivers them to a microcontroller 20 which is combined with a read-only memory (ROM) 22 containing the programs which are to be run by the microcontroller. A programmable read-only memory (EEPROM) 24 makes it possible to store in memory long-term data such as counters of the utilization of functions by the user, as will be explained later. A random-access memory (RAM) 23 also communicates with the microcontroller 20 so as to store non-persistent data, that is to say volatile data, in the course of the running of the programs.

The links of the random-access 23 and programmable 24 memories with the microcontroller are of the bidirectional type.

The microcontroller 20 controls, among other things, the user-interface control system and various functions of the television set, such as the volume, the channel changing, the brightness and the contrast, etc. It also controls a circuit 25 for displaying data on the screen, often called OSD circuit, for "On Screen Display". This OSD circuit 25 is a text and graphics generator which makes it possible to display on the screen the menus of the user interface, including the menu of the user's favourite functions. The OSD circuit 25 and the microcontroller 20 are furthermore linked to the audio and video circuits 26 of the television set.

Figure 3 represents an example of a hierarchical menu allowing access to various functions of the television set. This example is not in any way limiting and it is entirely possible to envisage applying the invention to hierarchical menus including other functions. The menu is represented in the form of a tree structure comprising nodes 30 to 47, each node corresponding to a menu, a sub-menu or to a choice of options in a sub-menu.

A main menu "CONTENTS" 30 comprises six headings which consist of the same number of sub-menus to which it is possible to gain access from the "CONTENTS":
- a "PROGRAMME GUIDE" 31,
- a "CHANNEL LIST" heading 32 making it possible to display the list of available channels,
- an "IMAGE" heading 33 making it possible to set certain parameters of the image,
- a "SOUND" heading 34 making it possible to set certain parameters relating to the sound,
- a "WAKE UP" heading 35 making it possible to select certain criteria for automatically turning the television set on, and
- a "FAVOURITE FUNCTIONS" heading 36 which allows access to the personalized menu containing the user's favourite functions. This heading is represented in dashed line in Figure 3 since, in certain situations, it may not be present in the "CONTENTS" menu, especially when the user is using the system for the first time and when no favourite function has been registered.

The "PROGRAMME GUIDE" sub-menu 31 itself includes four headings: "CHANNEL" 41, "THEME" 42, "DAY" 43 and "PERIOD" 44 which make it possible to select options for searching the programme guide (choice of a channel, of a theme, of the day of the week and of the period in the day).

The sub-menu "CHANNEL LIST" 32 makes it possible to display the list of channels 1 to N which can be viewed on the television set.

The sub-menu "IMAGE" 33 comprises four headings "CONTRAST", "BRIGHTNESS", "COLOUR" and "FORMAT" which correspond to functions for setting up the image on the television set, one of the functions, "FORMAT" 45, making it possible to choose between three possible display format options ("4/3", "ZOOM " or "16/9") .

The sub-menu "SOUND" 34 comprises three headings, "BASS", "TREBLE" and "SOUND FORMAT" which correspond to functions for setting up the sound of the television set. The "SOUND FORMAT" function 46 makes it possible to choose between two options, "STEREO" or "MONO".

Finally, the sub-menu "WAKE UP" comprises three headings: the first, "CHANNEL" 47, makes it possible to choose a channel which will be selected when the television set is automatically turned on, the second, "TIME", makes it possible to set the time at which it will be turned on, and the third, "ON/OFF", makes it possible to activate or not activate the "WAKE UP" function.

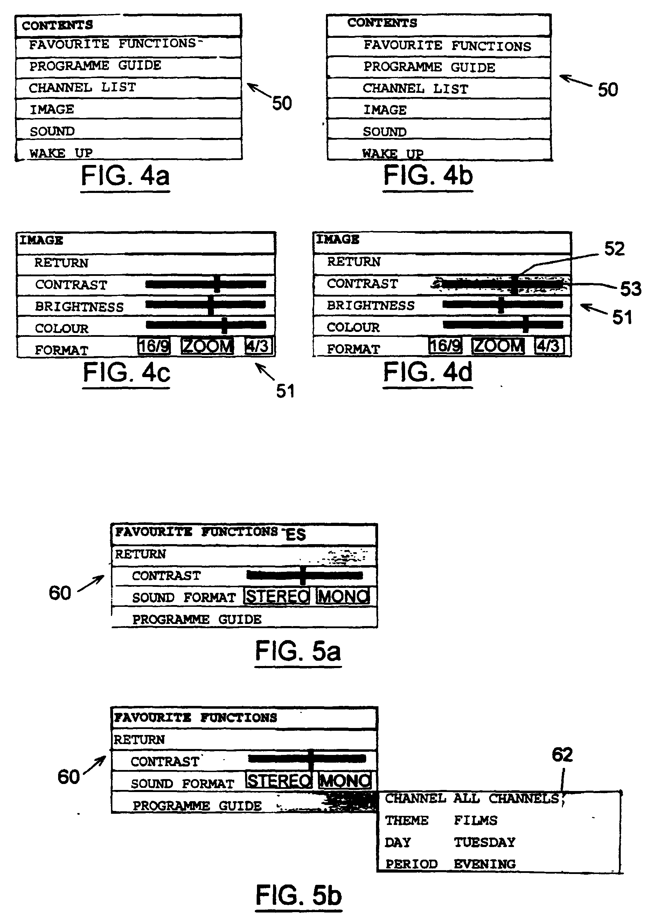

When the user wishes to activate a function of the hierarchical menu, for example the function of setting the contrast, he first of all has to press on a key of the remote-control device so as to cause the "CONTENTS" menu to be displayed. This menu appears on the screen of the television set as represented in Figure 4a, in a window 50 containing the six headings of the main menu. The first heading, "FAVOURITE FUNCTIONS", is selected by default (it appears shaded in Figure 4a).

As the "CONTRAST" function is found in the "IMAGE" sub-menu, the user has first of all to move to the window 50 by using particular keys of the remote-control device in order to select the "IMAGE" heading (Figure 4b) and to cause the "IMAGE" sub-menu to be displayed (window 51 - Figure 4c). A "RETURN" heading, which does not appear in the tree structure of Figure 3 but is present in each sub-menu in order to make it possible to get back to the main menu, is selected by default. The user then has to move to the window 51 in order to reach the "CONTRAST" function (Figure 4d). He can then adjust his contrast setting by using particular keys of the remote-control device, while viewing this setting by virtue of a cursor 52 moving along a line 53 of the window 51.

As can be seen, this succession of operations may appear tiresome, especially if the user often accesses the "CONTRAST" function.

This is why, in addition to the hierarchical menu which is represented in Figure 3, the user has available a personalized menu allowing him to gain access more easily to his favourite functions. This menu will be called "personalized menu" or "favourite-functions menu" indiscriminately in the rest of the description. According to the invention, this menu is created and updated dynamically, taking account of the frequency of use of the functions by the user, only those most frequently used appearing in the favourite-functions menu. This favourite-functions menu can be displayed, as was seen above, either by the use of a particular key 11 of the remote-control device or by activating a particular heading 36 of the hierarchical menu, accessible from the contents list.

In Figures 5a and 5b, an example of a user's favourite-functions menu has been represented in a window 60.

According to a preferred aspect of the invention, the personalized menu contains single functions and combined functions.

A single function is understood to be a function for control or setting of the apparatus, here of the television receiver, which corresponds to the duplication of a function from the original hierarchical menu, for example the "CONTRAST" function or the "SOUND FORMAT" function. These single functions appear in the favourite-functions menu with the same graphical interface as in the hierarchical menu.

In contrast, the combined functions correspond to combinations of functions and/or of options from the hierarchical menu, which in themselves constitute a meaningful action. These combined functions represent functions which are new by comparison with those existing in the hierarchical menu and group together several basic functions and/or options of the hierarchical menu.

A typical example in which it is beneficial to use a combined function is the programme-guide function. This is because the sub-menu "PROGRAMME GUIDE" 31 (Figure 3) includes, as was seen above, four headings 41 to 44 making it possible to select search options. When the user uses the hierarchical menu, in the conventional way, to gain access to the programme guide, he has, for each heading 41 to 44, to select an option before triggering the search if the options selected by default ("CHANNEL" = current channel viewed by the user; "THEME" = all themes; "DAY" = current day and "PERIOD" = current period) do not suit him. This represents a certain number of tiresome manual operations on the remote-control device.

This is why, according to a preferred aspect of the invention, if the user frequently uses the programme guide in order to search, for example, for films showing on all the channels on Tuesday evening, a combined function "PROGRAMME GUIDE", with the options "ALL CHANNELS", "FILMS", "TUESDAY" and "EVENING" selected respectively in the "CHANNEL", "THEME", "DAY" and "PERIOD" headings, will be created and added to the personalized menu as it is represented in Figure 5b. The user will thus be able to trigger the programme search directly without having to select the search options in advance.

One possible example of a combined-function graphical interface has been represented in Figure 5b. Hence, when the combined function "PROGRAMME GUIDE" is selected, the associated preselected options are displayed in a window 62, contiguous with the main window 60 of the personalized menu. In contrast, in Figure 5a, the "PROGRAMME GUIDE" function is not selected, and therefore the window 62 is not displayed. The single functions "CONTRAST" and "SOUND FORMAT", on the other hand, appear with the same graphical interface as in Figure 4d. Naturally, the invention is not limited to this graphical interface and other solutions can be envisaged.

We are now going to describe how the personalized menu containing the user's favourite functions is created and updated automatically.

First of all, it has to be stated that, among all the functions of the user-interface hierarchical menu, some have no need to be integrated into the favourite-functions menu, for example if they are accessible directly by the use of dedicated keys on the remote-control device (such as the channel-change keys or the "VOL +" and "VOL -" keys for setting the volume of the sound).

Hence, the functions which can be integrated into the personalized menu are defined at the outset. Those which can be integrated as single functions or as combined functions are also defined at the outset.

Every time one of these functions is activated by the user, whether it is via the interface of the hierarchical menu or via the personalized menu, an accesses counter for this function is incremented and the date and the time of the last access to the said function are updated.

To that end, a first table T1 stores the functions which can be integrated, either as a single function or as a combined function, into the personalized menu. This table T1 is stored permanently in memory in the non-volatile EEPROM memory 24 (Figure 2).

In the case of the hierarchical menu of Figure 3, the functions which can be inserted into the personalized menu as single functions appear in the form of words underlined in dotted line in Figure 3. In what follows, they will be designated as "single functions". This covers functions for setting-up the image ("CONTRAST", "BRIGHTNESS", "COLOUR" and "FORMAT") and the sound ("BASS", "TREBLE" and "SOUND FORMAT"). The functions which can be integrated into the personalized menu as combined functions, and which will be designated in what follows by "combined functions", are represented, in the menu tree structure of Figure 3, in the form of words underlined by a continuous line. In the example of Figure 3, there is only one single combined function: the "PROGRAMME GUIDE" function.

An example of a memory-stored table T1 is represented in table 1 below, in which the "Type" column defines the type, single (code "S") or combined (code "C"), of the function, the "Counter" column stores the function-accesses counter and the "Last access" column stores the times of last access of each function.

**Table 1**

| Function | Type | Counter | Last access |
|---|---|---|---|
| PROGRAMME GUIDE | C | 18 | 06.05.1999, 20:45 |
| CONTRAST | S | 21 | 07.05.1999, 21:19 |
| BRIGHTNESS | S | 5 | 04.05.1999, 10:23 |
| COLOUR | S | 10 | 02.05.1999, 07:56 |
| FORMAT | S | 7 | 26.04.1999, 12:04 |
| BASS | S | 2 | 12.04.1999, 19:38 |
| TREBLE | S | 0 | - |
| SOUND FORMAT | S | 18 | 08.05.1999, 17:45 |

The treatment is different, however, according to whether a single function or a combined function is involved.

This is because, in the case of the combined function "PROGRAMME GUIDE", the table T1 stores only the counter and the last overall access to the "PROGRAMME GUIDE" function. Another table T2 is additionally provided, associated with the combined function "PROGRAMME GUIDE" in order to store each combination of options which is selected by the user, as well as an accesses counter and the time of last access for each combination.

In the example of the menu illustrated by Figure 3, a single combined function exists, the "PROGRAMME GUIDE" function, but, in a general way, the hierarchical menu can include several combined functions. In this case, a supplementary table Ti {i > 1} is associated with each combined function in order to store the various combinations of options selected by the user.

These tables Ti of the combined functions are of variable sizes on two counts: on the one hand, the number of columns of the table varies as a function of the number of options associated with the combined function, and, on the other hand, the number of rows depends on the number of different combinations which the user selects.

Each table contains as many columns as there are options associated with the combined function, plus one column for the accesses counter and one column for storing the time of last access. A maximum number of rows, that is to say of entries, is also provided which depends on the availability of the memory resources of the system, for example 30 rows maximum.

An example of the contents of the table T2 is illustrated in table 2 below:

**Table 2**

| T2 - "PROGRAMME GUIDE" Function | | | | | |
|---|---|---|---|---|---|
| CHANNEL | THEME | DAY | PERIOD | Counter | Last access |
| ALL CHANNELS | FILMS | TUESDAY | EVENING | 10 | 06.05.1999, 20:45 |
| CHANNEL 1 | SPORT | SATURDAY | AFTERNOON | 6 | 28.04.1999, 15:04 |
| ALL CHANNELS | VARIETY | SUNDAY | EVENING | 2 | 10.03.1999, 18:27 |

It will be noted that the sum of the accesses counters of the table T2 (10 + 6 + 2) is equal to the contents of the overall counter for the combined function "PROGRAMME GUIDE" of table T1 (18) and the last access stored in memory in table T1 corresponds to the most recent last access of table T2. However it may also be possible for the sum of the accesses counters of table T2 to be less than the overall accesses counter associated with the "PROGRAMME GUIDE" function in table T1, for example in the case in which table T2 contains the maximum number of entries.

The contents of tables T1 and T2 (or more generally Ti {i > 1}) which have just been described are stored in memory in the non-volatile memory 24 every time the user exits the application of the user interface or when the television receiver is set to standby or is turned off. Hence, the contents of the tables T1 and T2 constitute permanent data of the user-interface control system.

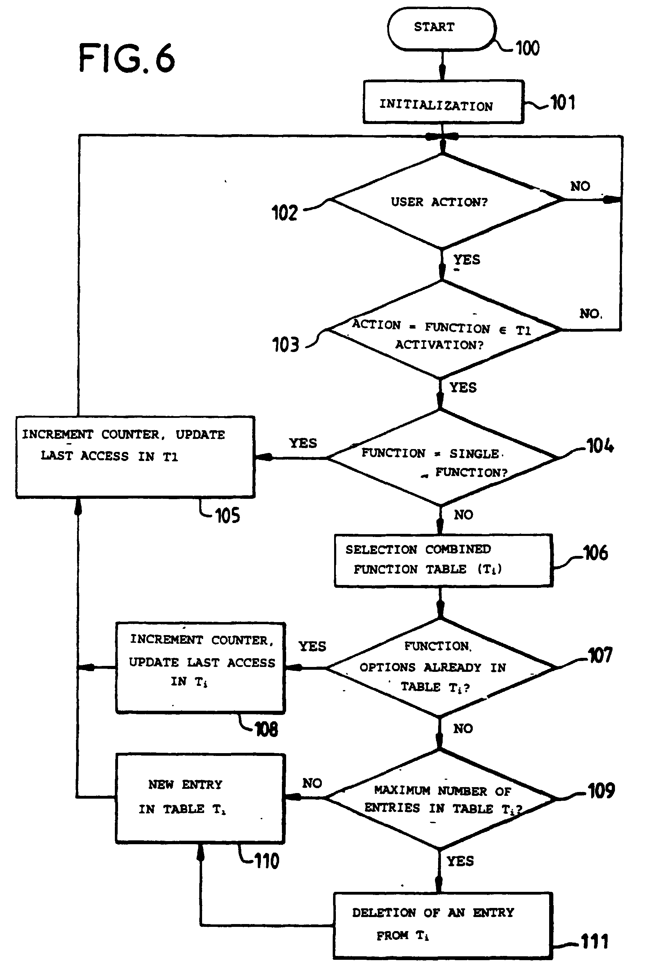

The method of updating the tables described above on the basis of the actions of the user will now be described in connection with Figure 6. This method is implemented by the microcontroller 20 of Figure 2.

It may be noted that, when the system is first used, the table T1 is prefilled with the columns "Counter" and "Last access" set to zero. The table T2 (or the tables Ti) for its (their) part is (are) empty.

The method starts at stage 100 followed by a stage 101 of initialization of the user-interface control system. During this stage 101, the tables T1 and T2 (or more generally Ti {i > 1}) which are stored in memory in the EEPROM non-volatile memory 24 are loaded into the RAM random-access memory 23 (Fig. 2).

The method continues with a first test 102 in order to ascertain whether the user has or has not carried out an action. If the response is negative, stage 102 is returned to and the first test is carried out a further time. On the other hand, if the response to the first test is positive, a second test is carried out at stage 103 in order to ascertain whether the action carried out by the user corresponds to the activation of one of the functions scheduled in the table T1. If the response to this second test is negative, stage 102 is returned to. In contrast, if the response is positive, it is ascertained at stage 104 whether the function activated by the user is a single function, that is to say whether the "type" column of table T1 indicates that it is a single function which is involved.

If the function activated is a single function ("YES" response to test 104), stage 105 is entered, consisting in incrementing the counter corresponding to the said function in the table T1 as well as in updating the "last access" column with the current time and date. Stage 102 is then returned to.

If the function activated is a combined function ("NO" response to test 104), then stage 106 is entered consisting in selecting the Ti table (T2 in our example) corresponding to the combined function activated by the user (the "PROGRAMME GUIDE" function in our example). The method carries on with stage 107 during which it is ascertained whether the combination of options selected by the user has already been catalogued in the Ti table or not, that is to say whether or not the user has already selected this combination of options in the past.

If the response to the test 107 is positive, that is to say if the combination of options which has just been chosen by the user can be found in the Ti table, then stage 108 is entered, consisting in incrementing the counter corresponding to this combination of options in the Ti table and in updating the "last access" column with the current time and date. For example, if the user has activated the "PROGRAMME GUIDE" function, selecting the options "ALL CHANNELS", "FILMS", "TUESDAY" and "EVENING", and if it is assumed that the table T2 contains the data present in table 2, then the counter corresponding to this selection of options will change from 10 to 11 and the "last access" will be updated with the current time and date. Stage 105 is then entered to increment the overall accesses counter and to update the last overall access to the combined function in the table T1. After stage 105, stage 102 is returned to.

If the response to test 107 is negative, that is to say if the combination of options chosen by the user is being selected for the first time, then a supplementary test is carried out at stage 109 in order to ascertain whether the Ti table already contains the maximum number of entries, namely 30 in our example. If the response to the test 109 is negative, then stage 110 is entered which consists in creating a new entry, that is to say a new row, in the Ti table in order to store in it the options which have just been chosen for the first time by the user with a counter value equal to 1 and the current time and date stored in memory in the "last access" column. Following stage 110, stage 105 is returned to, then stage 102, which are described above.

In the event of a positive response to test 109, that is to say if the Ti table already contains the maximum number of entries, the method carries on via a stage 111 consisting in deleting an entry, that is to say a row, from the Ti table according to the following criteria:
- the entry deleted is the one with the lowest counter; and
- if several entries have an identical counter value equal to the lowest value from the table, then the entry deleted is the one with the oldest last access.

Once the entry has been deleted, it is possible to store a new one. The method thus continues with stage 110.

We are now going to describe how the personalized menu is created when the user calls up his display, preferably by the use of the specific key 11 (Figure 1) of the remote-control device, or alternatively by activating the heading 36 "FAVOURITE FUNCTIONS" from the main menu "CONTENTS" (Fig. 3).

Two embodiments are envisaged for the method of creating the personalized menu.

According to the first embodiment, the personalized menu is created dynamically by the user-interface control system, upon each call by the user, according to the following criteria:
- the size of the personalized menu is fixed at N headings (N = 3 in the example of Figures 5a and 5b, but a much higher number N can advantageously be chosen) where N is a natural integer;
- the functions to be displayed in the N headings are chosen from table T1 by selecting the N functions which have the highest accesses counters. The functions are displayed in decreasing order on the basis of their counter values, the function having the highest counter being displayed first. If two or more functions have the same counter value, the function with the most recent last access is displayed first.
- when a combined function has to be displayed, it is displayed with the combination of options having the highest accesses counter in the Ti table corresponding to the said combined function (T2 in our example) and, in the event of equal counters, the combination of options with the most recent last access is chosen for the display.

Hence, if the tables T1 and T2 are regarded as being in the state which is represented in tables 1 and 2, for displaying the personalized menu represented in Figures 5a and 5b, the system proceeds as follows:
- it first of all detects in the table T1 the function which has the highest counter: in this case it is the single function "CONTRAST" (row 2 of T1 with the counter equal to 21); consequently, this function will be displayed first in the personalized menu;
- next, as two functions have a highest counter (equal to 18, first and last rows of T1) after that of the first function above, the system searches that one of the functions with the most recent last access: in this case it is the single function "SOUND FORMAT" (last access on 08.05.1999, 17:45) which will therefore be displayed in the second position in the personalized menu;
- the system then searches for the function with the most recent last access after the "SOUND FORMAT" function: in this case it is the combined function "PROGRAMME GUIDE", the last access to which goes back to 06.05.1999, 20:45, which will therefore be displayed in the last position on the personalized menu. In order then to search for the selection of options to be displayed in the window 62 (Fig. 5b), the system searches in the table T2 for the combination of options with the highest counter: in this case it is the options "CHANNEL" = "ALL CHANNELS", "THEME" = "FILMS", "DAY" = "TUESDAY" and "PERIOD" = "EVENING" (row 1 of T2).

According to the second embodiment, the personalized menu is still created dynamically by the user-interface control system, upon each call by the user, but the selection criteria are as follows:
- the size of the personalized menu is fixed at N headings (N being a natural integer); and
- the functions to be displayed in the N headings are chosen both from the table T1 and from the Ti tables (T2 in our example) of the combined functions, by selecting the functions having the highest accesses counters;
- the order of display of the functions still depends firstly on the value of the counters and secondly on the last accesses to the said functions.

In this embodiment, it is thus possible to obtain a personalized menu in which the same combined function is present twice, but with two different combinations of options if the user often activates these two combinations.

## Claims

1. System for control of the user interface of an item of mass-market electronic apparatus in which the functions of the said apparatus are accessible via a hierarchical menu and in which a personalized menu is provided containing the user's favourite functions, characterized in that the said system includes means for automatic creation and updating of the said personalized menu on the basis of the frequency of activation of the functions by the user, and in that the personalized menu is configured to contain:
- single functions, corresponding to the duplication, from the hierarchical menu, of functions for control and/or for setting of the said apparatus, and/or
- combined functions, combining at least one control and/or setting function and at least one parameter associated with at least one of the said control and/or setting functions.

2. System according to Claim 1, characterized in that only certain predefined functions from among the set of functions of the hierarchical menu are eligible to form part of the personalized menu.

3. System according to either of Claims 1 and 2, characterized in that it includes means (24, T1, T2) for memory storage of the frequency of activation of the functions by the user, the said memory-storage means being suitable for storing an accesses counter and the time of last access to each of the said functions.

4. System according to Claim 3, characterized in that the memory-storage means include a first table (T1) for storing all the functions eligible to form part of the personalized menu, as a single function or combined function, the said table storing the accesses counter and the time of last access to each of the said functions.

5. System according to Claim 4, characterized in that the memory-storage means further include a supplementary table (Ti {i > 1}) associated with each combined function in order to store the combinations of functions and/or of options activated by the user, as well as an accesses counter and the time of last access to each combination.

6. Method of control of the user interface of an item of mass-market electronic apparatus in which the functions of the said apparatus are accessible via a hierarchical menu and in which a personalized menu is provided containing the user's favourite functions, characterized in that it comprises the stages consisting in
a)- automatic creation and updating of the said personalized menu on the basis of the frequency of activation of the functions by the user, and in that the personalized menu is configured to contain 1) single functions, corresponding to the duplication, from the hierarchical menu, of functions for control and/or for setting of the said apparatus, and/or 2) combined functions, combining at least one control and/or setting function and at least one parameter associated with at least one of the said control and/or setting functions.
b)- memorization of the frequency of activation of the functions by the user, the said memory-storage means being suitable for storing in a first table (T1) an accesses counter and the time of last access to each of the said functions.compute, the said table (T1) allowing to store all the functions eligible to form part of the personalized menu, as a single function or combined function,
c)- detection (102) of carrying of an action by the user;
d)- in the event that an action is detected, test (103) whether the action carried out corresponds to the activation of a function stored in memory in the first table (T1);
e)- incremention (105) of the accesses counter for the said function and updating (105) the time of last access to the said function when the response to the preceding test is positive.

7. Method according to Claim 6, characterized in that mass-market electronic apparatus comprises a supplementary table (Ti {i > 1}) associated with each combined function in order to store the combinations of functions and/or of options activated by the user, as well as an accesses counter and the time of last access to each combination.and that it furthermore comprises the stages consisting in:
f) in the event of a positive response to the test (103) performed at stage d), testing (104) whether the function activated is a single function;
g) in the event of a negative response to the preceding test (104):
- selecting (106) the table (Ti) associated with the combined function activated;
- testing (107) whether the combination of functions and/or of options selected by the user is already present in the said table (Ti) associated with the combined function; and
- in the event of a positive response to the preceding test (107), incrementing (108) the accesses counter for the said combination and updating (108) the time of last access to the said combination.

8. Method according to Claim 7, characterized in that it further comprises the stages consisting in:
h) in the event of a negative response to the test (107) performed at stage g), testing (109) whether the table (Ti) associated with the combined function contains a maximum number of entries; and
i) in the event of a negative response to the preceding test (109), creating (110) a new entry in the said table (Ti) in order to store:
- the combination of functions and/or of options selected by the user;
- the accesses counter for the said combination, equal to one; and
- the time of last access to the said combination;
j) in the event of a positive response to the test (109) performed at stage h): deleting (111) an entry from the said table (Ti) according to the following criteria:
--) the entry deleted is the one with the lowest accesses counter; and
--) if several entries have an identical counter value equal to the lowest value, then the entry deleted is the one with the oldest last access;
and creating (110) a new entry in the said table (Ti) in accordance with stage i).

9. System according to one of Claims 1 to 5, suitable for being controlled by a remote-control device (1), characterized in that it includes means for presenting the personalized menu to the user when the latter presses a specific key (11) on the said remote-control device.

10. System according to one of Claims 1 to 5, characterized in that the hierarchical menu includes a heading (36), accessible from the highest hierarchical level, for causing the personalized menu to be presented.

11. System according to either of Claims 9 and 10 taken in their dependence on Claim 5, characterized in that it is suitable for creating the personalized menu dynamically upon each presentation of the said personalized menu according to the following criteria:
- the size of the personalized menu is fixed at N headings, where N is a natural integer;
- the functions present in the N headings are chosen from the first table (T1) by selecting the N functions which have the highest accesses counters and by presenting them in decreasing order on the basis of their counter values;
- if two or more functions have the same counter value, the function with the most recent last access is presented first.

12. System according to Claim 11, characterized in that a supplementary criterion is used for the presentation of the said personalized menu:
- when a combined function has to be present in the N headings, it is presented with the combination of options having the highest accesses counter in the supplementary table (Ti) corresponding to the said combined function and, in the event of equal counters, with the combination of options with the most recent last access.

13. System according to either of Claims 9 and 10 taken in their dependence on Claim 5, characterized in that it is suitable for creating the personalized menu dynamically upon each presentation of the said personalized menu according to the following criteria:
- the size of the personalized menu is fixed at N headings, where N is a natural integer;
- the functions present in the N headings are chosen from among the first table (T1) and/or at least one supplementary table (Ti) by selecting the N functions which have the highest accesses counters and by presenting them in decreasing order on the basis of their counter values.

14. Audiovisual broadcast receiver, characterized in that it includes a system for control of its user interface according to one of Claims 1 to 5 and 9 to 13.
